# EUROPÄISCHE PATENTANMELDUNG

(11) **EP 1 726 734 A2**
(43) Veröffentlichungstag der Anmeldung: **29.11.2006**
(21) Anmeldenummer: 06010129.2
(22) Anmeldetag: 17.05.2006
(51) Int. Cl.: E04F 11/18, F16B 9/02, F16B 7/18

(54) **Handlaufbefestigungsvorrichtung**

(30) Priorität: 18.05.2005 DE 202005007999 U
(71) Anmelder: Julius Cronenberg oH, 59757 Arnsberg (DE)
(72) Erfinder: Heribert Tetampel, 59759 Arnsberg (DE); Carl-Julius Cronenberg, 59757 Arnsberg (DE)
(74) Vertreter: Brune, Axel

(57) **Zusammenfassung**

Die vorliegende Erfindung betrifft eine Handlaufbefestigungsvorrichtung (1), geeignet zur Montage eines Handlaufs (2) an einem Pfosten (3) oder dergleichen, umfassend mindestens ein Abstandselement (6), das für eine Beabstandung des Handlaufs (2) vom Pfosten (3) geeignet ist, mindestens eine Abschlusskappe (4), die im Bereich einer oberen Querschnittsöffnung des Pfostens (3) angebracht ist sowie Montagemittel, die für eine lösbare Anbringung des mindestens einen Abstandselements (6) an der Abschlusskappe (4) geeignet sind, wobei ein erstes Ende (60) des mindestens einen Abstandselements (6) derart geformt ist, dass der Handlauf (2) bei der Montage auf das erste Ende (60) aufgesetzt und mittels einer stoffschlüssigen Verbindung daran befestigt werden kann.

## Beschreibung

Die vorliegende Erfindung betrifft eine Handlaufbefestigungsvorrichtung nach dem Oberbegriff des Anspruchs 1.

Handlaufbefestigungsvorrichtungen der eingangs genannten Art sind aus dem Stand der Technik in unterschiedlichen Ausführungsformen bereits bekannt. Bei den bekannten Handlaufbefestigungsvorrichtungen wird der Handlauf zum Beispiel mit Hilfe eines entsprechend geformten Adapterelements an einem Abstandselement der Handlaufbefestigungsvorrichtung angebracht. Ein Nachteil der bekannten Handlaufbefestigungsvorrichtungen besteht insbesondere darin, dass das Adapterelement häufig den ästhetischen Gesamteindruck stört. Ferner ist es sehr aufwendig, den Handlauf zusammen mit der Handlaufbefestigungsvorrichtung wieder vom Pfosten zu lösen, um beispielsweise nach der Anpassung des Handlaufs zusätzliche Bearbeitungsschritte vorzunehmen oder bei Unebenheiten des Bodens ohne großen Aufwand in der Höhe auszurichten. Ein zusätzlicher Nachteil besteht in der Kombination unterschiedlicher Werkstoffe beziehungsweise Oberflächen.

Hier setzt die vorliegende Erfindung an.

Der vorliegenden Erfindung liegt die Aufgabe zugrunde, eine Handlaufbefestigungsvorrichtung vorzuschlagen, die einfach und kostengünstig montiert werden kann und die nach der Montage auf einfache Weise zusammen mit dem Handlauf wieder vom Pfosten gelöst werden kann.

Die Lösung dieser Aufgabe liefert eine Handlaufbefestigungsvorrichtung mit den Merkmalen des Anspruchs 1. Die Unteransprüche betreffen bevorzugte Weiterbildungen der Erfindung.

Erfindungsgemäß wird vorgeschlagen, dass ein erstes Ende des mindestens einen Abstandselements derart geformt ist, dass der Handlauf bei der Montage auf das erste Ende aufgesetzt und mittels einer stoffschlüssigen Verbindung daran befestigt werden kann. Bei der Montage wird die Handlaufbefestigungsvorrichtung zunächst mit Hilfe der Montagemittel lösbar am Pfosten befestigt. Anschließend kann dann der Handlauf angepasst und am ersten Ende des Abstandselements mittels einer stoffschlüssigen Verbindung befestigt werden.

Im Allgemeinen umfasst ein Geländer, insbesondere ein Treppen- oder Balkongeländer, welches der Handlauf endseitig abschließt, eine Mehrzahl von Pfosten, die voneinander beabstandet sind. Vorzugsweise ist an jedem dieser Pfosten die hier beschriebene Handlaufbefestigungsvorrichtung angebracht. Soll der Handlauf zusammen mit der Handlaufbefestigungsvorrichtung von den Pfosten entfernt werden, damit beispielsweise eine weitere Bearbeitung möglich ist, müssen lediglich die Montagemittel gelöst werden. Anschließend kann der Handlauf zusammen mit den Handlaufbefestigungsvorrichtungen von den Pfosten entfernt werden. Nach der Weiterbearbeitung können die Handlaufbefestigungsvorrichtungen zusammen mit dem Handlauf wieder an den Pfosten montiert werden. Auf diese Weise kann die Montagezeit verkürzt werden.

In einer besonders bevorzugten Ausführungsform wird vorgeschlagen, dass die stoffschlüssige Verbindung eine Schweißverbindung ist.

Schweißverbindungen sind sehr stabil und lassen sich relativ einfach und kostengünstig herstellen.

In einer besonders bevorzugten Ausführungsform wird vorgeschlagen, dass die Montagemittel mindestens einen Montagestift umfassen und dass das mindestens eine Abstandselement mindestens eine Ausnehmung aufweist, die so geformt ist, dass der mindestens eine Montagestift bei der Montage formschlüssig oder zumindest im Wesentlichen formschlüssig in die mindestens eine Ausnehmung eingreifen kann. Bei der Montage der Handlaufbefestigungsvorrichtung kann das Abstandselement somit sehr einfach auf den Montagestift gesteckt werden, so dass ohne zusätzliche Montagemittel bereits eine erste Fixierung des Abstandselements im Bereich der Abschlusskappe des Pfostens hergestellt werden kann.

Vorzugsweise können die Montagemittel mindestens ein Sicherungsmittel umfassen, geeignet, das Abstandselement lösbar Montagestift zu fixieren. Dadurch kann insbesondere eine axiale Fixierung des Abstandselements am Montagestift erreicht werden. Das mindestens eine Sicherungsmittel kann somit verhindern, dass das Abstandselement der Handlaufbefestigungsvorrichtung beispielsweise unbeabsichtigt vom Montagestift gelöst werden kann.

Es besteht die Möglichkeit, dass das mindestens eine Sicherungsmittel mindestens eine Madenschraube umfasst. Die Madenschraube, die beispielsweise durch eine Öffnung in einer Außenwand des Abstandselements gesteckt werden kann, kann bei der Montage in einen Abschnitt des Montagestifts eingreifen und auf diese Weise die Handlaufbefestigungsvorrichtung verschiebesicher und/oder verdrehsicher am Montagestift fixieren.

In einer bevorzugten Ausführungsform wird vorgeschlagen, dass der Montagestift an der Abschlusskappe angeschraubt ist. Dadurch kann der Montagestift beispielsweise sehr leicht durch einen anderen Montagestift, der beispielsweise hinsichtlich seines Durchmessers und/oder hinsichtlich seiner axialen Ausdehnung anders dimensioniert sein kann, ausgetauscht werden.

In einer besonders bevorzugten Ausführungsform wird vorgeschlagen, dass der Montagestift an einem Ende ein Außengewinde aufweist und dass die Abschlusskappe mindestens eine Gewindebohrung aufweist, in die das Außengewinde des Montagestifts bei der Montage eingreifen kann. In dieser Ausführungsform werden keine zusätzlichen Befestigungsmittel für die Anbringung des Montagestifts an der Abschlusskappe benötigt.

Es besteht weiterhin die Möglichkeit, dass die Abschlusskappe in eine obere Querschnittsöffnung des Pfostens mindestens abschnittsweise eingeklebt ist. Dadurch kann die Fixierung der Abschlusskappe in der Querschnittsöffnung des Pfostens verbessert werden.

Vorzugsweise ist die Abschlusskappe eine Rändelkappe.

Es kann ferner vorgesehen sein, dass das Abstandselement mindestens abschnittsweise abgewinkelt ist.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine teilweise geschnittene Stirnseitenansicht eines Handlaufs, der mittels einer Handlaufbefestigungsvorrichtung gemäß einer ersten Ausführungsform der vorliegenden Erfindung an einem Pfosten angebracht ist;
- Fig. 2: eine teilweise geschnittene Stirnseitenansicht eines Handlaufs, der mittels einer Handlaufbefestigungsvorrichtung gemäß einer zweiten Ausführungsform der vorliegenden Erfindung an einem Pfosten angebracht ist.

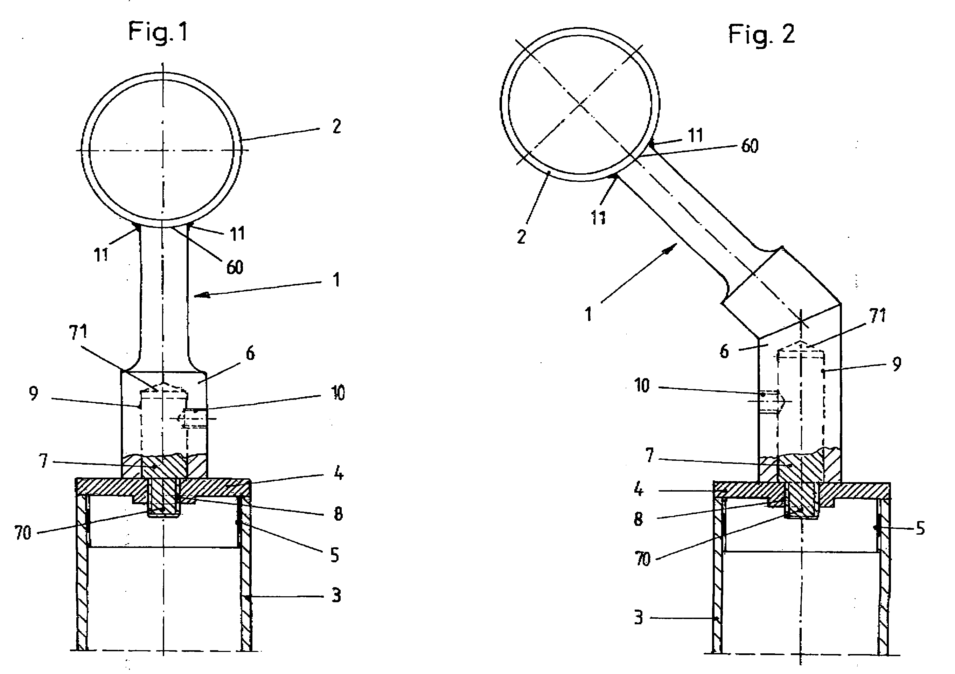

Zunächst wird auf Fig. 1 Bezug genommen, in der ein Handlauf 2 dargestellt ist, der mittels einer Handlaufbefestigungsvorrichtung 1 gemäß einer ersten Ausführungsform der vorliegenden Erfindung lösbar an einem Pfosten 3 angebracht ist, Der hier gezeigte Handlauf 2 schließt ein hier nicht explizit gezeigtes Geländer, insbesondere ein Treppengeländer oder ein Balkongeländer, welches eine Anzahl von Pfosten 3 aufweist, an einer Oberseite ab. Vorzugsweise ist an jedem der Pfosten 3 des Geländers die hier gezeigte Handlaufbefestigungsvorrichtung 1 vorgesehen.

Die Handlaufbefestigungsvorrichtung 1 ist lösbar an einer Abschlusskappe 4 des Pfostens 3 angebracht. Die Abschlusskappe 4, die in diesem Ausführungsbeispiel als Rändelkappe ausgeführt ist, ist vorzugsweise unlösbar beziehungsweise nur sehr schwer lösbar im Bereich einer oberen Querschnittsöffnung des Pfostens 3 angebracht.

Beispielsweise kann die Abschlusskappe 4 in den Pfosten 3 eingeschlagen und gegebenenfalls zusätzlich mit Hilfe einer Klebeverbindung 5 mindestens abschnittsweise an einer Innenwand des Pfostens 3 fixiert sein.

Der Handlauf 2 weist in diesem Ausführungsbeispiel einen im Wesentlichen kreisrunden Querschnitt auf. Es kann in alternativen Ausführungsformen aber auch vorgesehen sein, dass der Handlauf 2 einen von der hier gezeigten, im Wesentlichen kreisrunden Form abweichenden Querschnitt aufweist. Beispielsweise kann der Handlauf 2 auch einen im Wesentlichen ovalen oder auch eckigen Querschnitt aufweisen.

Die Handlaufbefestigungsvorrichtung 1 weist ein Abstandselement 6 auf, geeignet, den Handlauf 2 nach der Montage in vertikaler Richtung vom Pfosten 2 zu beabstanden. Ferner umfasst die Handlaufbefestigungsvorrichtung 1 Montagemittel, die für eine lösbare Anbringung des Abstandselements 6 an der Abschlusskappe 4 des Pfostens 3 geeignet sind.

Die Abschlusskappe 4 weist in diesem Ausführungsbeispiel eine im Wesentlichen zentriert angeordnete Gewindebohrung 8 mit einem Innengewinde auf. Um das Abstandselement 6 an der Abschlusskappe 4 anzubringen, ist ein Montagestift 7 vorgesehen, der abschnittsweise im Wesentlichen zylindrisch geformt ist und an einem ersten Ende 70 ein Außengewinde aufweist, das mit dem Innengewinde der Gewindebohrung 8 der Abschlusskappe 4 korrespondiert, so dass der Montagestift 7 bei der Montage mit der Abschlusskappe 4 verschraubt werden kann. Ein zweites Ende 71 des Montagestifts 7, das dem ersten Ende gegenüberliegt, ist in diesem Ausführungsbeispiel abschnittsweise im Wesentlichen konisch ausgeführt.

Das Abstandselement 6 weist eine Ausnehmung 7 auf, die ebenfalls abschnittsweise zylindrisch geformt ist und hinsichtlich ihrer Größe und Form derart ausgebildet ist, dass das Abstandselement 6 bei der Montage auf den Montagestift 7 gesteckt werden kann. Der Montagestift 7 greift also bei der Montage formschlüssig oder zumindest im Wesentlichen formschlüssig in die Ausnehmung 7 des Abstandselements 6 ein.

Um die vorstehend beschriebene Anordnung insbesondere gegen eine Verschiebung in axialer Richtung zu sichern, sind Sicherungsmittel vorgesehen. Die Sicherungsmittel umfassen in diesem Ausführungsbeispiel eine Madenschraube 10 oder dergleichen, die abschnittsweise in eine ihr zugeordnete Vertiefung oder Nut, die am Montagestift 7 vorgesehen ist, eingreifen kann. Auf diese Weise kann das Abstandselement 6 der Handlaufbefestigungsvorrichtung 1 gegen eine axiale Verschiebung gesichert werden.

Nach der Anbringung des Abstandselements 6 an der Abschlusskappe 4 des Pfostens 3 kann der Handlaufhalter 2 angepasst und anschließend an einem entsprechend geformten oberen Ende 60 des Abstandselements 6 stoffschlüssig angebracht werden. Vorzugsweise wird der Handlauf 2 mindestens abschnittsweise mit dem oberen Ende des Abstandselements 6 verschweißt. Die Schweißverbindungen 11 stellen auf einfache Weise eine dauerhafte und unlösbare Verbindung des Handlaufs 2 mit dem oberen Ende 60 des Abstandselements 6 der Handlaufbefestigungsvorrichtung 1 zur Verfügung.

Der Handlauf 2 kann somit auf einfache Weise am Abstandselement 6 der Handlaufbefestigungsvorrichtung 1 montiert werden, ohne dass dazu weitere Adapterelemente oder dergleichen benötigt werden. Die gesamte Anordnung kann anschließend durch einfaches Lösen der Madenschraube 10 vom Montagestift 7 gelöst werden. Ein entsprechendes Vorgehen bei den übrigen Handlaufbefestigungsvorrichtungen 1 und Posten 3 des Geländers ermöglicht es, den Handlauf 2 zusammen mit den Handlaufbefestigungsvorrichtungen 1 von den an den Abschlusskappen 4 der Posten 3 angebrachten Montagestiften 7 zu entfernen, um weitere Bearbeitungsschritte auszuführen.

In Fig. 2 ist ein zweites Ausführungsbeispiel der Handlaufbefestigungsvorrichtung 1 gezeigt. Die Handlaufbefestigungsvorrichtung 1 unterscheidet sich von der ersten Ausführungsform dadurch, dass das Abstandselement 6 abschnittweise abgewinkelt ist.

## Patentansprüche

1. Handlaufbefestigungsvorrichtung (1), geeignet zur Montage eines Handlaufs (2) an einem Pfosten (3) oder dergleichen, umfassend:
- mindestens ein Abstandselement (6), das für eine Beabstandung des Handlaufs (2) vom Pfosten (3) geeignet ist,
- mindestens eine Abschlusskappe (4), die im Bereich einer oberen Querschnittsöffnung des Pfostens (3) angebracht ist,
- Montagemittel, die für eine lösbare Anbringung des mindestens einen Abstandselements (6) an der Abschlusskappe (4) geeignet sind,
**dadurch gekennzeichnet, dass** ein erstes Ende (60) des mindestens einen Abstandselements (6) derart geformt ist, dass der Handlauf (2) bei der Montage auf das erste Ende (60) aufgesetzt und mittels einer stoffschlüssigen Verbindung daran befestigt werden kann.

2. Handlaufbefestigungsvorrichtung (1) nach Anspruch 1, **dadurch gekennzeichnet, dass** die stoffschlüssige Verbindung eine Schweißverbindung (11) ist.

3. Handlaufbefestigungsvorrichtung (1) nach Anspruch 1 oder 2, **dadurch gekennzeichnet, dass** die Montagemittel mindestens einen Montagestift (7) umfassen und dass das mindestens eine Abstandselement (6) mindestens eine Ausnehmung (9) aufweist, die so geformt ist, dass der mindestens eine Montagestift (7) bei der Montage formschlüssig oder zumindest im Wesentlichen formschlüssig in die mindestens eine Ausnehmung (9) eingreifen kann.

4. Handlaufbefestigungsvorrichtung (1) nach einem der Ansprüche 1 bis 3, **dadurch gekennzeichnet, dass** die Montagemittel mindestens ein Sicherungsmittel umfassen, geeignet, das Abstandselement (6) lösbar am Montagestift (7) zu fixieren.

5. Handlaufbefestigungsvorrichtung (1) nach Anspruch 4, **dadurch gekennzeichnet, dass** das mindestens eine Sicherungsmittel mindestens eine Madenschraube (10) umfasst.

6. Handlaufbefestigungsvorrichtung (1) nach einem der Ansprüche 1 bis 5, **dadurch gekennzeichnet, dass** der Montagestift (7) an der Abschlusskappe (4) angeschraubt ist.

7. Handlaufbefestigungsvorrichtung (1) nach Anspruch 6, **dadurch gekennzeichnet, dass** der Montagestift (7) an einem Ende (70) ein Außengewinde aufweist und dass die Abschlusskappe (4) mindestens eine Gewindebohrung (8) aufweist, in die das Außengewinde des Montagestifts (7) bei der Montage eingreifen kann.

8. Handlaufbefestigungsvorrichtung (1) nach einem der Ansprüche 1 bis 7, **dadurch gekennzeichnet, dass** die Abschlusskappe (4) in die obere Querschnittsöffnung des Pfostens (3) mindestens abschnittsweise eingeklebt ist.

9. Handlaufbefestigungsvorrichtung (1) nach einem der Ansprüche 1 bis 8, **dadurch gekennzeichnet, dass** die Abschlusskappe (4) eine Rändelkappe ist.

10. Handlaufbefestigungsvorrichtung (1) nach einem der Ansprüche 1 bis 9, **dadurch gekennzeichnet, dass** das Abstandselement (6) mindestens abschnittsweise abgewinkelt ist.
